# EUROPEAN PATENT APPLICATION

(11) **EP 4 597 972 A1**
(43) Date of publication of application: **06.08.2025**
(21) Application number: 24155083.9
(22) Date of filing: 31.01.2024
(51) Int. Cl.: H04L 41/5009, H04L 41/22, H04L 41/50

(54) **A METHOD AND A SYSTEM FOR MONITORING A CLOUD SERVICE PROVIDED BY A HYPERSCALER**

(71) Applicant: Deutsche Telekom AG, 53113 Bonn (DE)
(72) Inventor: HOHNSTEDT, Niklas, 53115 Bonn (DE); BRAND, Bernd, 61273 Wehrheim (DE)
(74) Representative: RDL Patentanwälte PartG mbB

(57) **Abstract**

Method and system for monitoring one or more cloud services provided by one or more hyperscalers for one or more customers.

## Description

The invention relates to a method for monitoring a cloud service. The invention further relates to a system for monitoring a cloud service.

Methods and systems of the above-mentioned type may be used to monitor a performance of so-called hyperscalers, i.e., companies allowing customers for hyperscale computing in an internet cloud. The hyperscaler usually operates and provides a customer with a plurality of cloud services according to a service level agreement, SLA, agreed on with a customer. Usually the hyperscaler is able to scale each cloud service on demand wherein the cloud services may comprise a computational power, a storage, a network functionality, interfaces and the like. The listed items are usually referred to as cloud resources.

The customer may desire to monitor the performance of one or more than one hyperscalers each hyperscaler providing one or more different cloud services. In case the customer is audited the customer may even be required to monitor used cloud services in order to avoid a finding concerning usage of the cloud service.

It is, therefore, an object of the invention to suggest a method for monitoring a cloud service which allows an audited customer for avoiding a finding concerning usage of a cloud service, i.e., a method which is audit-safe. Another object of the invention is to provide a system for monitoring a cloud service.

An aspect of the invention is a method for monitoring a cloud service. The cloud service may be provided by a hyperscaler operating and providing a plurality of different cloud services. At least one cloud service and usually each cloud service may by scaled by the hyperscaler on demand. The cloud service may comprise a computational power, a storage, a network functionality, interfaces and the like.

According to the invention, a function app of a customer's customer instance of a system retrieves health data from a cloud service servicing the customer based on an application programming interface, API, secret provided by a key vault of the customer instance and stores the retrieved health data in a service level agreement, SLA, database of the customer instance; and the function app receives a report file based on stored service level agreements, SLA, and the stored health data and generated by the SLA database, creates a structured text file from the received report file and stores the created structured text file in a blob storage of the customer instance. The customer is subscribed to the cloud service according to an SLA the customer and the hyperscaler have agreed on. The customer instance may be considered a production environment exclusively deployed for the customer.

The function app of the customer instance is a central entity of the customer instance and communicates with the cloud service. The function app may retrieve the health data upon a request transmitted to the cloud service. The function app further communicates with the SLA database the key vault and the blob storage. Apart from that, the function app converts the report file into the structured text file. It is pointed out that the function app does not retrieve personal data of the customer.

The API secret fully specifies an API of the cloud service and enables the function app to communicate with the cloud service. The API may be, for instance, a google API and the like.

The system is configured for monitoring the cloud service and is deployed by an operator of the system once for each customer. The health data may indicate a current state and performance of the cloud service. Particularly, the health data allows for comparing the current state and performance of the cloud service to the SLA the customer and the hyperscaler have agreed on.

A name of the cloud service, a geographic location of the cloud service, a subscription ID of the customer, a project ID of the customer and/or event data related to the cloud service may be additionally retrieved from the cloud service. The listed informations facilitate associating the structured text file with the cloud service for the customer, i.e., they have an administrative character.

Generating the report file advantageously comprises calculating service level agreement, SLA, values and outage times of the cloud service. In other words, the SLA database not only stores health data of the cloud service but also processes stored health data.

Preferably, a customer interface of the system retrieves the stored structured text file from the blob storage, processes the retrieved structured text file and displays the processed structured text file. The customer interface converts the retrieved structured text file into a format readily understandable by the customer, i.e., a human being.

The API secret may be stored in the key vault, updated in the key vault or deleted from the key vault by the customer using a customer interface of the system. The customer interface allows to specify the cloud service to be monitored, adapt a specification of the cloud service and remove the specification. Thus, the customer is enabled to decide at any time whether the cloud service is monitored or is not monitored, i.e., when monitoring the cloud service is started or stopped.

In an embodiment, configuration data is stored in the key vault by the customer using a customer interface of the system. The configuration data may comprise a parameter specifying an alert raised by the customer interface in case an SLA is not met by the cloud service. Entering configuration data allows the customer to implement a tagging strategy for monitoring the cloud service, i.e., entering search parameters, thresholds and the like.

Retrieving health data from the cloud service preferably comprises retrieving the API secret and/or configuration data from the key vault. Operation of the function app is always based on current API secrets and configuration data.

The customer may be once invited to have the cloud service monitored by an operator using an operator interface of the system and, after accepting the invitation, the customer may log in to the system using a customer interface of the system. The invitation and the acceptance of the invitation initially enables the customer to monitor the cloud service.

Exemplarily, a JSON file, a CSV file or an XML file may be created as the structured text file. The listed file formats, i.e., JSON, CSV and XML are widely used and do not restrict the invention. Another file format may be used readily.

Respective function apps of a plurality of different customer instances preferably carry out the method simultaneously and/or a plurality of different cloud services may be monitored. The system allows the operator of the system for servicing many customers each customer subscribed to many cloud services provided by many hyperscalers.

Advantageously, a common monitoring instance of the system receives logging information from respective function apps of the customer instances and stores the received logging information. Exception events and metrics, both of the monitored cloud service and the function app, may be received by the common monitoring instance. The common monitoring instance may further automatically analyze the stored logging information. It is pointed out that the common monitoring instance does not receive personal data of the customer. In other words, the logging information received by the common monitoring instance is anonymous.

The common monitoring instance may delete the stored logging information after an age out time. An automatic deletion of the logging information may be required by law and/or may reduce a storage space required by the common monitoring instance.

Another aspect of the invention is a system for monitoring a cloud service. The system is used for enabling a customer to have a cloud service monitored.

According to the invention, the system comprises a customer instance with a function app, a key vault, a blob storage and an SLA database and is configured for carrying out a method according to an embodiment of the invention. The function app may be coded, for instance, using NET6+ C#. The SLA database may, for instance, be an SQL database comprising algorithms for processing health data, the algorithms exemplarily coded using T-SQL.

The system may further comprise a monitoring unit, a customer interface and/or an operator interface. The customer interface and the operator interface are user interfaces, Ul. The customer interface and/or the operator interface may be provided by a third party, e.g., Matrix42 which is known as a Cloud Cost Control Web Ul and connected to the system.

Still another aspect of the invention is a computer program product, comprising a digital storage medium storing a program code readable by a computing device. The digital storage medium comprises a compact disk, CD, a digital versatile disk, DVD, a hard disk, HD, a random access memory, RAM, chip, a universal serial bus, USB, stick, a cloud storage and the like.

According to the invention, the program code causes the computing device to carry out a method according to an embodiment of the invention as a customer instance of a system for monitoring a cloud service when being executed by a processor of the computing device. The customer instance allows a customer subscribed to a cloud service provided by a hyperscaler according to an SLA to have the cloud service reliably monitored.

An essential advantage of the inventive method is that it allows a customer for reliably monitoring a cloud service and, thus, avoiding an audit finding concerning usage of the cloud service, i.e., a method which is audit-safe. Another advantage is that the method does not require personal data of the customer and, hence, is in conformity with legal privacy requirements.

It shall be understood that the features described previously and to be described subsequently may be used not only in the indicated combinations but also in different combinations or on their own without leaving the scope of the present invention.

The invention is described in detail by means of exemplary embodiments and with reference to the accompanying drawings. Like components are indicated by like reference numerals throughout the drawings. Therein:

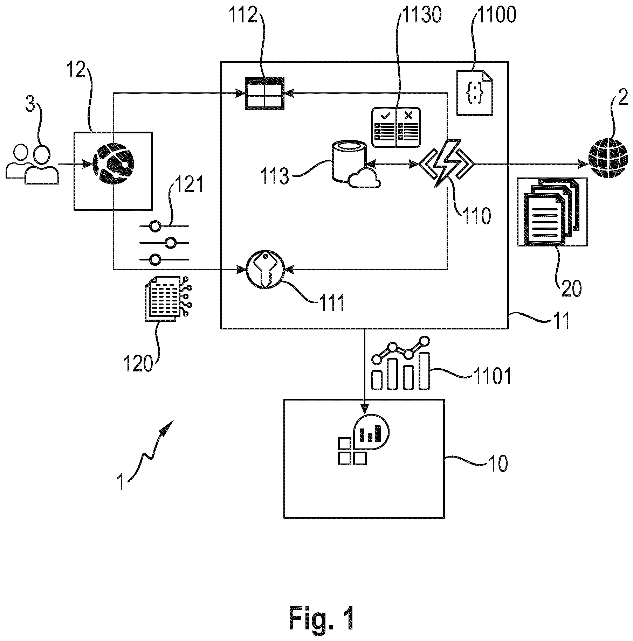

Fig. 1 schematically shows a diagram of a system according to an embodiment of the invention for monitoring a cloud service.

Fig. 1 schematically shows a diagram of a system 1 according to an embodiment of the invention for monitoring a cloud service 2.

The system 1 for monitoring the cloud service 2 comprises a customer instance 11 with a function app 110, a key vault 111, a blob storage 112 and an SLA database 113. The system may further comprise a monitoring unit 10, a customer interface 12 and/or an operator interface (not shown).

The customer instance 11 may be implemented by means of a computer program product. The computer program product comprises a digital storage medium storing a program code readable by a computing device. The program code causes the computing device to carry out a method according to an embodiment of the invention as the customer instance 11 of the system 1 for monitoring the cloud service 2 when being executed by a processor of the computing device.

The system 1 is configured for carrying out the following inventive method for monitoring the cloud service 2 at regular time intervals, e.g., once a day, automatically.

As a prerequisite, the customer 3 is once invited to have the cloud service 2 monitored by an operator using an operator interface of the system 1. After accepting the invitation, the customer 3 logs in to the system 1 using the customer interface 12 of the system 1.

The function app 110 of a customer's 3 customer instance 11 of the system 1 retrieves health data 20 from a cloud service 2 servicing the customer 3 based on an application programming interface, API, secret 120. Retrieving health data 20 from the cloud service 2 may comprise retrieving the API secret 120 from the key vault 111.

The API secret 120 is provided by a key vault 111 of the customer instance 11. The API secret 120 may be stored in the key vault 111, updated in the key vault 111 or deleted from the key vault 111 by the customer 3 using the customer interface 12 of the system 1.

Configuration data 121 may also be stored in the key vault 111 by the customer 3 using the customer interface 12 of the system 1. Retrieving health data 20 from the cloud service 2 may also comprise retrieving configuration data 121 from the key vault 111.

The function app 110 stores the retrieved health data 20 in a service level agreement, SLA, database 113 of the customer instance 11.

A name of the cloud service 2, a geographic location of the cloud service 2, a subscription ID of the customer 3, a project ID of the customer 3 and/or event data related to the cloud service 2 may be additionally retrieved from the cloud service 2.

The function app 110 receives a report file 1130 based on the provided API secret 120 and the stored health data 20 and generated by the SLA database 113. Generating the report file 1130 may comprise calculating service level agreement, SLA, values and outage times of the cloud service 2.

The function app 110 creates a structured text file 1100 from the received report file 1130 and stores the created structured text file 1100 in a blob storage 112 of the customer instance 11. For instance, a JSON file, a CSV file or an XML file may be created as the structured text file 1100.

The customer interface 12 of the system 1 may retrieve the stored structured text file 1100 from the blob storage 112, process the retrieved structured text file 1100 and display the processed structured text file 1100.

It is preferred that respective function apps 110 of a plurality of different customer instances 11 carry out the method simultaneously and/or a plurality of different cloud services 2 is monitored.

A common monitoring instance 10 of the system 1 may receive logging information 1101 from respective function apps 110 of the customer instances 11 and store the received logging information 1101. The common monitoring instance 10 may delete the stored logging information 1101 after an age out time, e.g., after 90 days.

### Reference Numerals

- 1: system
- 10: common monitoring instance
- 11: customer instance
- 110: function app
- 1100: structured text file
- 1101: logging information
- 111: key vault
- 112: blob storage
- 113: SLA database
- 1130: report file
- 12: customer interface
- 120: API secret
- 121: configuration data
- 2: cloud service
- 20: health data
- 3: customer

## Claims

1. A method for monitoring a cloud service (2), wherein, at regular time intervals automatically,
- a function app (110) of a customer's (3) customer instance (11) of a system (1) retrieves health data (20) from a cloud service (2) servicing the customer (3) based on an application programming interface, API, secret (120) provided by a key vault (111) of the customer instance (11) and stores the retrieved health data (20) in a service level agreement, SLA, database (113) of the customer instance (11); and
- the function app (110) receives a report file (1130) based on stored service level agreements, SLA, and the stored health data (20) and generated by the SLA database (113), creates a structured text file (1100) from the received report file (1130) and stores the created structured text file (1100) in a blob storage (112) of the customer instance (11).

2. The method according to claim 1, wherein a name of the cloud service (2), a geographic location of the cloud service (2), a subscription ID of the customer (3), a project ID of the customer (3) and/or event data related to the cloud service (2) are additionally retrieved from the cloud service (2).

3. The method according to claim 1 or 2, wherein generating the report file comprises calculating service level agreement, SLA, values and outage times of the cloud service (2).

4. The method according to one of claims 1 to 3, wherein a customer interface (12) of the system (1) retrieves the stored structured text file (1100) from the blob storage (112), processes the retrieved structured text file (1100) and displays the processed structured text file (1100).

5. The method according to one of claims 1 to 4, wherein the API secret (120) is stored in the key vault (111), updated in the key vault (111) or deleted from the key vault (111) by the customer (3) using a customer interface (12) of the system (1).

6. The method according to one of claims 1 to 5, wherein configuration data (121) is stored in the key vault (111) by the customer (3) using a customer interface (12) of the system (1).

7. The method according to one of claims 1 to 6, wherein retrieving health data (20) from the cloud service (2) comprises retrieving the API secret (120) and/or configuration data (121) from the key vault (111).

8. The method according to one of claims 1 to 7, wherein the customer (3) once is invited to have the cloud service (2) monitored by an operator using an operator interface of the system (1) and, after accepting the invitation, the customer (3) logs in to the system (1) using a customer interface (12) of the system (1).

9. The method according to one of claims 1 to 8, wherein a JSON file, a CSV file or an XML file is created as the structured text file (1100).

10. The method according to one of claims 1 to 9, wherein respective function apps (110) of a plurality of different customer instances (11) carry out the method simultaneously and/or a plurality of different cloud services (2) is monitored.

11. The method according to one of claims 1 to 10, wherein a common monitoring instance (10) of the system (1) receives logging information (1101) from respective function apps (110) of the customer instances (11) and stores the received logging information (1101).

12. The method according to claim 11, wherein the common monitoring instance (10) deletes the stored logging information (1101) after an age out time.

13. A system (1) for monitoring a cloud service (2), comprising a customer instance (11) with a function app (110), a key vault (111), a blob storage (112) and an SLA database (113), the system (1) configured for carrying out a method according to one of claims 1 to 12.

14. The system according to claim 13, comprising a monitoring unit (10), a customer interface (12) and/or an operator interface (12).

15. A computer program product, comprising a digital storage medium storing a program code readable by a computing device, the program code causing the computing device to carry out a method according to one of claims 1 to 12 as a customer instance (11) of a system (1) for monitoring a cloud service (2) when being executed by a processor of the computing device.

## Amended claims

### Amended claims in accordance with Rule 137(2) EPC.

1. A method for monitoring a cloud service (2), wherein, at regular time intervals automatically,
- a function app (110) of a customer's (3) customer instance (11) of a system (1) retrieves health data (20) from a cloud service (2) servicing the customer (3) based on an application programming interface, API, secret (120) provided by a key vault (111) of the customer instance (11) and stores the retrieved health data (20) in a service level agreement, SLA, database (113) of the customer instance (11); and
- the function app (110) receives a report file (1130) based on stored service level agreements, SLA, and the stored health data (20) and generated by the SLA database (113), creates a structured text file (1100) from the received report file (1130) and stores the created structured text file (1100) in a blob storage (112) of the customer instance (11).

2. The method according to claim 1, wherein a name of the cloud service (2), a geographic location of the cloud service (2), subscription ID of the customer (3), a project ID of the customer (3) and/or event data related to the cloud service (2) are additionally retrieved from the cloud service (2).

3. The method according to claim 1 or 2, wherein generating the report file comprises calculating service level agreement, SLA, values and outage times of the cloud service (2).

4. The method according to one of claims 1 to 3, wherein a customer interface (12) of the system (1) retrieves the stored structured text file (1100) from the blob storage (112), processes the retrieved structured text file (1100) and displays the processed structured text file (1100).

5. The method according to one of claims 1 to 4, wherein the API secret (120) is stored in the key vault (111), updated in the key vault (111) or deleted from the key vault (111) by the customer (3) using a customer interface (12) of the system (1).

6. The method according to one of claims 1 to 5, wherein configuration data (121) is stored in the key vault (111) by the customer (3) using a customer interface (12) of the system (1).

7. The method according to one of claims 1 to 6, wherein retrieving health data (20) from the cloud service (2) comprises retrieving the API secret (120) and/or configuration data (121) from the key vault (111).

8. The method according to one of claims 1 to 7, wherein the customer (3) once is invited to have the cloud service (2) monitored by an operator using an operator interface of the system (1) and, after accepting the invitation, the customer (3) logs in to the system (1) using a customer interface (12) of the system (1).

9. The method according to one of claims 1 to 8, wherein a JSON file, a CSV file or an XML file is created as the structured text file (1100).

10. The method according to one of claims 1 to 9, wherein respective function apps (110) of a plurality of different customer instances (11) carry out the method simultaneously and/or a plurality of different cloud services (2) is monitored.

11. The method according to one of claims 1 to 10, wherein a common monitoring instance (10) of the system (1) receives logging information (1101) from a respective function app (110) of each customer instance (11) and stores the received logging information (1101).

12. The method according to claim 11, wherein the common monitoring instance (10) deletes the stored logging information (1101) after an age out time.

13. A system (1) for monitoring a cloud service (2), comprising a customer instance (11) with a function app (110), a key vault (111), a blob storage (112) and an SLA database (113), the system (1) configured for carrying out a method according to one of claims 1 to 12.

14. The system according to claim 13, comprising a monitoring unit (10), a customer interface (12) and/or an operator interface (12).

15. A computer program product, comprising a digital storage medium storing a program code readable by a computing device, the program code causing the computing device to carry out a method according to one of claims 1 to 12 as a customer instance (11) of a system (1) for monitoring a cloud service (2) when being executed by a processor of the computing device.
